(19) Europäisches Patentamt
European Patent Office
Office européen des brevets

(11) Veröffentlichungsnummer : **0 177 766 B2**

# (12) NEUE EUROPÄISCHE PATENTSCHRIFT

(45) Veröffentlichungstag der neuen Patentschrift : **27.11.91 Patentblatt 91/48**

(51) Int. Cl.$^5$ : **C08G 18/32**, C08G 18/65, C08G 18/00

(21) Anmeldenummer : **85111268.0**

(22) Anmeldetag : **06.09.85**

## (54) Verwendung von sterisch gehinderten aromatischen Diaminen bei der Herstellung von Polyurethanschaumstoffen.

(30) Priorität : **15.09.84 DE 3433979**

(43) Veröffentlichungstag der Anmeldung : **16.04.86 Patentblatt 86/16**

(45) Bekanntmachung des Hinweises auf die Patenterteilung : **01.06.88 Patentblatt 88/22**

(45) Bekanntmachung des Hinweises auf die Entscheidung über den Einspruch : **27.11.91 Patentblatt 91/48**

(84) Benannte Vertragsstaaten : **AT BE CH DE FR GB IT LI NL SE**

(56) Entgegenhaltungen :
**BE-A- 685 700**
**FR-A- 2 352 010**
**US-A- 3 909 465**

(56) Entgegenhaltungen :
**US-A- 4 218 543**
**US-A- 4 296 212**
**Kirch-Othmer, Encyclopedia of Chemical Technology, 3rd. Ed., Vol. 23, pp. 596-597 (1983)**

(73) Patentinhaber : **BAYER AG**
**W-5090 Leverkusen 1 Bayerwerk (DE)**

(72) Erfinder : **Kopp, Richard, Dr.**
**Bilharzstrasse 15**
**W-5000 Koeln 80 (DE)**
Erfinder : **Oertel, Günter, Dr.**
**Berta-von-Suttner-Strasse 20**
**W-5090 Leverkusen (DE)**
Erfinder : **Weigand, Eckehard, Dr.**
**Menzlingen 4B**
**W-5064 Roesrath (DE)**
Erfinder : **Wiedermann, Rolf, Dr.**
**Wiesenstrasse 18**
**W-5068 Odenthal (DE)**

EP 0 177 766 B2

## Description

Die Verwendung von sterisch gehinderten aromatischen Diaminen bei der Herstellung von formgeschäumten Polyurethanschaumstoffen ist bekannt (DE-OS 2 622 951, US-PS 3 583 926, USPS 4 374 222). Die vorliegende Erfindung betrifft dagegen die Verwendung von sterisch gehinderten aromatischen Diaminen bei der Herstellung von freigeschäumten Polyurethanschaumstoffen, insbesondere bei der Herstellung von sogenannten Spritzschaumstoffen (Ortschaumstoff nach dem Spritzverfahren, vgl. DIN 18159, Teil 1, Abs. 3.2). Erfindungsgemäss werden zäh-harte Polyurethanschaumstoffe, insbesondere Spritzschaumstoffe, erhalten, die die Anforderungen der Baustoffklasse B2 nach DIN 4102 erfüllen und eine gute Haftung am Untergrund ergeben.

Polyurethanspritzschaumstoffe, die die Anforderungen der Baustoffklasse B2 nach DIN 4102 erfüllen, sind als Dämmstoffe für das Bauwesen bekannt. Die Verarbeitung dieser Spritzschaumstoffe z. B. auf der Baustelle wird sehr stark durch ungünstiges Wetter beeinträchtigt, woraus erhebliche wirtschaftliche Einbussen resultieren. Einer der grössten Nachteile der bisher bekannten Spritzschaum-Systeme besteht darin, dass sie nur bei Umgebungstemperaturen von grösser als 10°C angewendet werden können. Zu niedrige Temperaturen des zu beschäumenden Untergrundes führen dazu, dass der ersten aufgesprühten Lage des schäumfähigen Polyurethan-Reaktionsgemisches zuviel Reaktionswärme entzogen wird. Daraus resultiert nicht nur eine erhöhte Rohdichte, sondern auch eine Versprödung des Schaumstoffes aufgrund unvollständiger Reaktion, die bis zu einem « sandigen » Erscheinungsbild der Schaumstoffunterseite führen kann. Die Sprödigkeit der Schaumstoffunterseite ist der Grund für den Verlust der guten Haftungseigenschaften am Untergrund, die das Schaumsystem bei der Verarbeitung auf ausreichend temperiertem Untergrund aufweist.

Aufgabe der vorliegenden Erfindung war, ein Polyurethanschaumstoffsystem zur Verfügung zu stellen, das insbesondere nach dem Spritzverfahren mit Vorteil eingesetzt werden kann und die oben beschriebenen Nachteile vermeidet. Überraschenderweise wurde gefunden, dass es durch Verwendung von bestimmten sterisch gehinderten aromatischen Diaminen bei der Herstellung von Polyurethanschaumstoffen, insbesondere nach dem Spritzverfahren, also insbesondere bei der Herstellung von Polyurethan-Spritzschaumstoffen gelingt, die oben beschriebenen Nachteile zu vermeiden. Die erfindungsgemäss erhältlichen Spritzschaumstoffe zeigen überraschenderweise schon beiniedrigen Temperaturen wie etwa 5°C gute Haftungseigenschaften am Untergrund, ohne dass das Brandverhalten und die übrigen Schaumstoffeigenschaften beeinträchtigt werden.

Gegenstand der Erfindung ist die Verwendung von sterisch gehinderten aromatischen Diaminen der allgemeinen Formel(n)

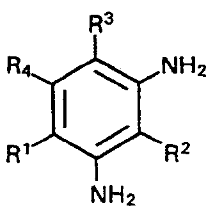

und/oder

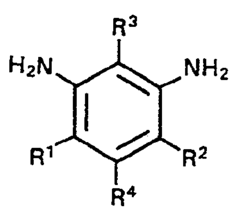

in der

$R^1$ und $R^2$ gleich oder verschieden sind und $C_1$-$C_4$-Alkyl und

$R^3$ und $R^4$ ebenfalls gleich oder verschieden sind und H oder $CH_3$ bedeuten, bei der Herstellung von freigeschäumten Polyurethanschaumstoffen.

Erfindungsgemäss ist bevorzugt, dass als sterisch gehinderte aromatische Diamine solche der Formel(n)

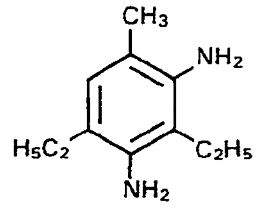

und/oder

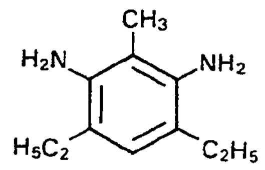

eingesetzt werden.

Besonders bevorzugt ist, dass als sterisch gehinderte aromatische Diamine ein Gemisch aus 80 Gew.-%

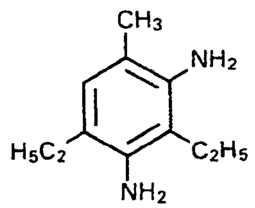

und 20 Gew.-%

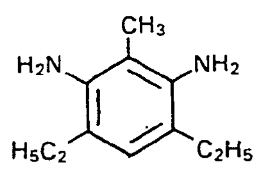

eingesetzt wird.

Ebenfalls besonders bevorzugt ist, dass als sterisch gehinderte aromatische Diamine eine Gemisch aus 65 Gew.-%

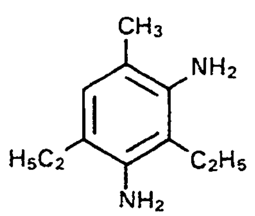

und 35 Gew.-%

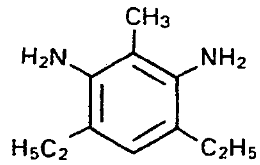

eingesetzt wird.

Nach der Ausführungsform der Erfindung sind die Diamine in der Polyolkomponente des schäumfähigen Reaktionssystems enthalten.

Die sterisch gehinderten aromatischen Diamine werden in einer Menge von 1,0 bis 6 Gew.-°%, vorzugsweise von 1,0 bis 3,5 Gew.-%, bezogen auf die Polyolkomponente, eingesetzt.

Die Herstellung der erfindungsgemäss zu verwendenden aromatischen Diamine ist an sich bekannt.

Für die Herstellung der freigeschäumten Polyurethanschaumstoffe werden eingesetzt.

1. Als Ausgangskomponenten aliphatische, cycloaliphatische, araliphatische, aromatische und hererocyclische Polyisocyanate, wie sie z. B. von W. Siefken in Justus Liebigs Annalen der Chemie, 562, Seiten 75 bis 136, beschrieben werden, beispielsweise solche der Formel

$$Q(NCO)_n$$

in der

n = 2-4, vorzugsweise 2, und
Q einen aliphatischen Kohlenwasserstoffrest mit 2-18, vorzugsweise 6-10 C-Atomen,
einen cycloaliphatischen Kohlenwasserstoffrest mit 4-15, vorzugsweise 5-10 C-Atomen,
einen aromatischen Kohlenwasserstoffrest mit 6 bis 15, vorzugsweise 6-13 C-Atomen,
oder einen araliphatischen Kohlenwasserstoffrest mit 8-15, vorzugsweise 8-13 C-Atomen,
bedeuten, z.B. solche Polyisocyanate, wie sie in der DE-OS 2 832 253, Seiten 10-11, beschrieben werden.

Besonders bevorzugt werden in der Regel die technisch leicht zugänglichen Polyisocyanate, z. B. das 2,4- und 2,6-Toluylendiisocyanat sowie beliebige Gemische dieser Isomeren (« TDI ») Polyphenyl-polymethylenpolyisocyanate, wie sie durch Anilin-Formaldehyd-Kondensation und anschliessende Phosgenierung hergestellt werden (rohes « MDI ») und Carbodiimidgruppen, Urethangruppen, Allophanatgruppen, Isocyanatgruppen, Harnstoffgruppen oder Biuretgruppen aufweisenden Polyisocyanate (« modifizierte Polyisocyanate »), insbesondere solche modifizierten Polyisocyanate, die sich vom 2,4-und/oder 2-6-Toluylendiisocyanat bzw. vom 4,4'-und/oder 2,4'-Diphenylmethandiisocyanat ableiten.

2. Als Ausgangskomponenten ferner Verbindungen mit mindestens zwei gegenüber Isocyanaten reaktionsfähigen Wasserstoffatomen und einem Molekulargewicht in der Regel von 400-10 000 (« Polyolkomponente »). Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1000 bis 8000, vorzugsweise 2000 bis 4000, z.B. mindestens zwei, in der Regel 2 bis 8, vorzugsweise aber 2 bis 4, Hydroxylgruppen aufweisende Polyester, Polyether, Polythiolether, Polyacetale, Polycarbonate und Polyesteramide, wie sie für die Herstellung von homogenen und von zellförmigen Polyurethanen an sich bekannt sind und wie z.B. in der DE-OS 2 832 2 53, Seiten 11-18, beschrieben werden.

3. Gegebenenfalls als Ausgangskomponenten Verbindungen mit mindestens zwei gegenüber Isocyanaten reaktionsfähigen Wasserstoffatomen und einem Molekulargewicht von 32 bis 400 (noch « Polyolkomponente »). Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19-20, beschrieben.

4. Wasser und/oder leicht flüchtige organische Substanzen.

5. Gegebenenfalls Hilfs- und Zusatzmittel wie

a) Katalysatoren der an sich bekannten Art in der Regel in Mengen von bis zu 10 Gew.-%, bezogen auf die « Polyolkomponente »,

b) oberflächenaktive Zusatzstoffe, wie Emulgatoren und Schaumstabilisatoren,

c) Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane

sowie Pigmente oder Farbstoffe und Flammschutzmittel der an sich bekannten Art, z.B. Trischlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Russ- oder Schlämmkreide.

Diese gegebenenfalls mitzuverwendenden Hilfs-und Zusatzstoffe werden beispielsweise in der DEOS 2 732 292, Seiten 21 -24, beschrieben.

Weitere Beispiele von gegebenenfalls erfindungsgemässen mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sich im Kunststoff-Handbuch, Band VII, herausgegeben von Vieweg und Höchtlen, Carl-Hanser-Verlag, München 1966, z. B. auf den Seiten 103-113 beschrieben.

Durchführung der Erfindung:

Die Reaktionskomponenten werden erfindungsgemäss nach dem an sich bekannten Einstufenverfahren, dem Prepolymerverfahren oder dem Semiprepolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäss in Frage kommen, werden im Kunststoff-Handbuch, Band VII, herausgegeben von Vieweg und Höchtlen, Carl-Hanser-Verlag, München 1966, z.B. auf den Seiten 121-205, beschrieben.

Bevorzugt ist das Einstufenverfahren, besonders bevorzugt ist die Herstellung der Polyurethanschaumstoffe nach dem Spritzverfahren (Herstellung von sog. « Spritzschaumstoffen »).

Selbstverständlich können aber auch die Polyurethanschaumstoffe nach dem an sich bekannten Transportbandverfahren hergestellt werden.

Die Herstellung der freigeschäumten Polyurethanschaumstoffe erfolgt erfindungsgemäss bei Kennzahlen in der Regel von 95-150, vorzugsweise (insbesondere bei der Herstellung von Spritzschaumstoffen) von 110-135.

Die erfindungsgemäss erhältlichen Polyurethan-Schaumstoffe finden z.B. Anwendung als Liege- und Sitzmöbel, Dämm-Materialien, insbesondere aber als Spritzschaumstoffe z. B. für die Dachdämmung.

*Beispiele*

A. (Vergleich)

Eine Polyolmischung zur Herstellung von Spritzschaumstoffen bestehend aus

| | |
|---|---|
| 10,0 Gew.-% | Zucker/Propylenglykol-Propylenoxid-Polyether (OH-Zahl 380, mit 40 Gew.-% Propylenglykol-PO-Polyether) |
| 28,5 Gew.-% | Ester aus Phthalsäureanhydrid und Ethylenglykol (OH-Zahl 270) |
| 14,4 Gew.-% | Ethylendiamin-Propylenoxid-Polyether (OH-Zahl 630) |
| 9,5 Gew.-% | Ethylendiamin-Propylenoxid-Polyether (OH-Zahl 470) |
| 7,7 Gew.-% | Glycerin |
| 28,7 Gew.-% | Tris-chlorethyl-phosphat |
| 1,0 Gew.-% | Silikonstabilisator (L 5420, Union Carbide Co) |
| 0,2 Gew.-% | Wasser |

wird mit 0,3 Gew.-% (bezogen auf die Polyolmischung) eines Gemisches aus Triethylamin und Dibutylzinndilaurat im Molverhältnis 1:1 aktiviert, mit 23 Gew.-% (bezogen auf die Polyolmischung) Monofluortrichlormethan als Treibmittel versehen und mit polymerem Diphenylmethandiisocyanat (rohes MDI; NCO-Gehalt 31 Gew.-%; Viskosität ca. 200 mPas/ 25°C) unter Verwendung einer Spritzmaschine mit volumetrischer 1:1-Dosierung frei verschäumt.

Folgendes wurde beobachtet:

1. Bei Verarbeitung auf Asbestzement von 20°C ist die Haftung am Untergrund grösser als die Querzugfestigkeit des Schaumstoffes und der Schaumstoff erfüllt die Anforderungen der Baustoffklasse B2 nach DIN 4102 sowie die übrigen Bedingungen der DIN 18159, Teil 1, für Spritzschaumstoffe.
2. Bei Verarbeitung auf Asbestzement von 5°C beobachtet man eine « Versandung » der Schaumstoffunterseite und selbständige Ablösung des Schaumstoffes vom Untergrund.

3. Nach Zusatz von 4 Gew.-% Jeffamine® D-2000 (Polyoxypropylenpolyamin der Fa. Texaco) zur oben beschriebenen Polyolmischung und Verarbeitung auf Asbestzement von 5°C gelingt es zwar, die Haftung des Schaumstoffes am Untergrund zu verbessern, aber der Schaumstoff erfüllt nicht mehr die Anforderungen der Baustoffklasse B2 nach DIN 4102. Auch die Mindestanforderungen nach DIN 18159, Teil 1, werden nicht mehr in vollem Umfang erfüllt.

B. (Erfindungsgemäss)

Ein Zusatz von 2 Gew.-% einer Mischung aus
80 Gew.-% 1 -Methyl-3,5-diethyl-2,4-diaminobenzol und
20 Gew.-% 1 -Methyl-3,5-diethyl-2,6-diaminobenzol
zur oben beschriebenen Polyolmischung erlaubt die Verarbeitung auf Asbestzement von 5°C mit Haftfestigkeiten wie unter A 1) beschrieben. Brandverhalten und übrige Schaumstoffeigenschaften sind ebenfalls wie unter A 1) beschrieben.

C. (Erfindungsgemäss)

Ein Zusatz von 3 Gew.-% einer Mischung aus
65 Gew.-% 1 -Methyl-3,5-diethyl-2,4-diaminobenzol und
35 Gew.-% 1 -Methyl-3,5-diethyl-2,6-diaminobenzol
zur oben beschriebenen Polyolmischung erlaubt ebenfalls die Verarbeitung auf Asbestzement von 5°C mit Haftfestigkeiten und Brandverhalten und übrigen Schaumstoffeigenschaften wie unter A 1) beschrieben.

## Patentansprüche

1. Verwendung von sterisch gehinderten aromatischen Diaminen der allgemeinen Formel (n)

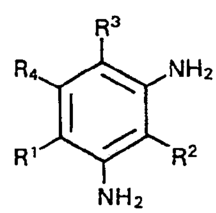

und/oder

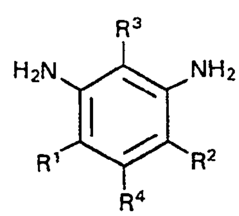

in der

$R^1$ und $R^2$ gleich oder verschieden sind und $C_1$-$C_4$-Alkyl und
$R^3$ und $R^4$ ebenfalls gleich oder verschieden sind und H oder $CH_3$ bedeuten,

bei der Herstellung von zäh harten freigeschäumten Polyurethanschaumstoffen, wobei die Diamine in der Polyolkomponente des schäumfähigen Reaktionssystems enthalten sind und in einer Menge von 1 bis 6 Gew.-%, bezogen auf die Polyolkomponente, eingesetzt werden.

2. Verwendung gemäss Anspruch 1, dadurch gekennzeichnet, dass als sterisch gehinderte aromatische Diamine solche der Formel (n)

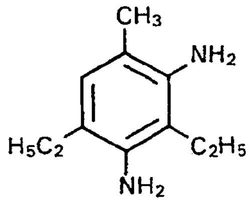

und/oder

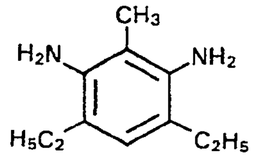

eingesetzt werden.

3. Verwendung gemäss Ansprüchen 1 und 2, dadurch gekennzeichnet, dass als sterisch gehinderte aromatische Diamine ein Gemisch aus 80 Gew.-°%

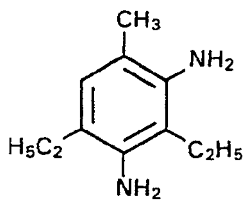

und 20 Gew.-%

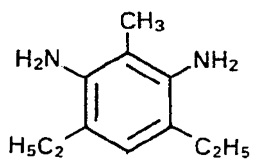

eingesetzt wird.

4. Verwendung gemäss Ansprüchen 1 und 2, dadurch gekennzeichnet, dass als sterisch gehinderte aromatische Diamine ein Gemisch aus 65 Gew.-%

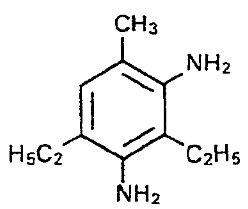

und 35 Gew.-%

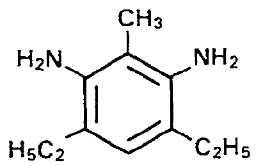

eingesetzt wird.

5. Verwendung von sterisch gehinderten aromatischen Diaminen gemäss Ansprüchen 1 bis 4 bei der Herstellung von Polyurethanschaumstoffen nach dem Spritzverfahren.

**Claims**

1. The use of sterically hindered aromatic diamines corresponding to the following general formula(e)

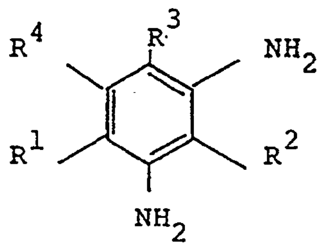

and/or

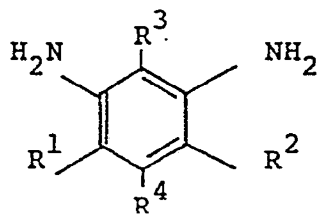

in which

$R^1$ and $R^2$ may be the same or different and represent $C_1$-$C_4$ alkyl and

$R^3$ and $R^4$ may also be the same or different and represent H or $CH_3$,

in the production of tough and rigid in situ polyurethane foams, the diamines being present in the polyol component of the foamable reaction system in a quantity of from 1 to 6% by weight, based on the polyol component.

2. The use claimed in Claim 1, characterized in that the sterically hindered aromatic diamines used correspond to the following formula(e)

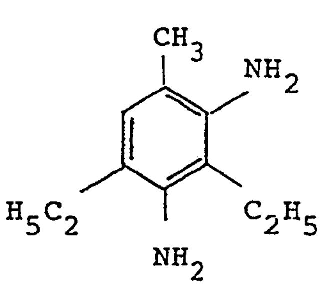

and/or

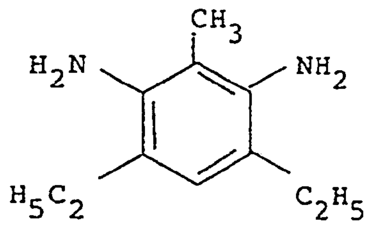

3. The use claimed in Claims 1 and 2, characterized in that a mixture of 80% by weight of

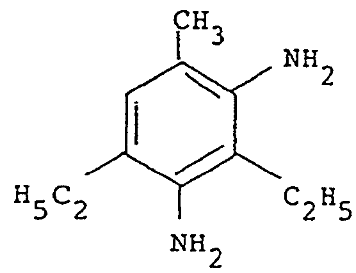

and 20%,by weight of

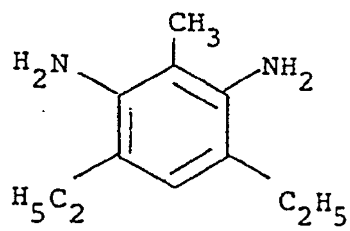

is used as the sterically hindered aromatic diamines.

4. The use claimed in Claims 1 and 2, characterized in that a mixture of 65% by weight of

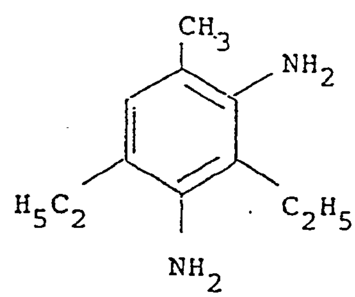

## Revendications

1. Utilisation de diamines aromatiques à empêchement stérique de formule(s) générale(s)

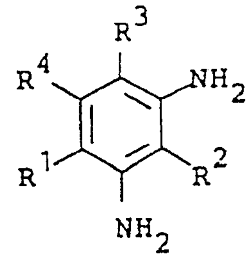

et/ou

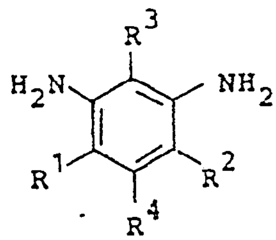

dans lesquelles

$R^1$ et $R^2$ sont identiques ou différents et signifient un alcoyle en $C_1$-$C_4$ et

$R^3$ et $R^4$ sont de même identiques ou différents et signifient H ou $CH_3$,

dans la fabrication de matières cellulaires en polyuréthanes expansées librement, tenaces et dures, les diamines étant contenues dans le composant polyol du système de réaction capable de mousser et étant utilisées en une quantité de 1 à 6% en poids par rapport au composant polyol.

2. Utilisation selon la revendication 1, caractérisée en ce qu'en tant que diamines aromatiques à empêchement stérique on utilise celles de formule(s)

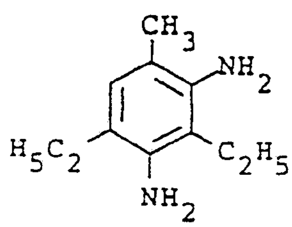

et/ou

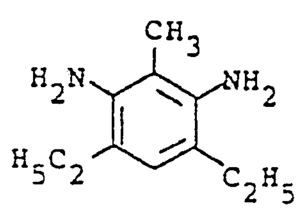

3. Utilisation selon les revendications 1 et 2, caractérisée en ce qu'en tant que diamines aromatiques à empêchement stérique on utilise un mélange de 80% en poids de

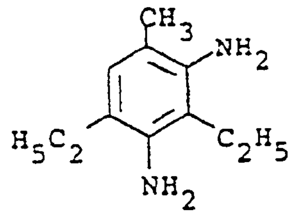

et de 20% en poids de

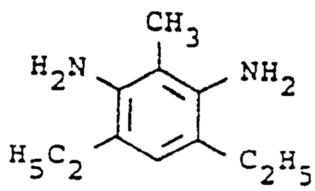

4. Utilisation selon les revendications 1 et 2, caractérisée en ce qu'en tant que diamines aromatiques à empêchement stérique on utilise un mélange de 65% en poids de

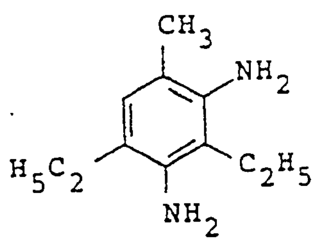

et 35% en poids de

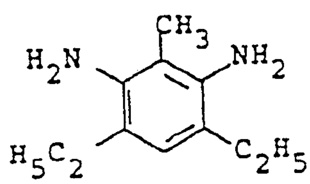

5. Utilisation de diamines aromatiques à empêchement stérique selon les revendications 1 à 4 dans la fabrication de matières cellulaires en polyuréthanes selon le procédé de projection.